# EUROPEAN PATENT APPLICATION

(11) **EP 4 160 795 A1**
(43) Date of publication of application: **05.04.2023**
(21) Application number: 22778364.4
(22) Date of filing: 09.02.2022
(51) Int. Cl.: H01M 50/15

(54) **BATTERY CELL, BATTERY, AND DEVICE USING BATTERY CELL AS POWER SOURCE**

(30) Priority: 29.03.2021 CN 202120635838 U
(71) Applicant: Contemporary Amperex Technology Co., Limited, Ningde City, Fujian PRC 352100 (CN)
(72) Inventor: CHEN, Xin, Ningde City, Fujian 352100 (CN); GE, Xiaoming, Ningde City, Fujian 352100 (CN)
(74) Representative: Gong, Jinping
(86) International application number: PCT/CN2022/075666
(87) International publication number: WO 2022/206176

(57) **Abstract**

The present application relates to a battery cell, a battery and a device using a battery cell as a power source, wherein the battery cell comprises a case and an end cap, wherein the case is provided with an opening, the end cap is used for covering the opening and is in sealed connection with the case, one of the case or the end cap is provided with a notch, the other is provided with a protrusion, the protrusion is provided within the notch and matches the shape of the notch, and the end cap is fitted on the case by mating the protrusion with the notch. Different from the prior art, the end cap of the battery cell of the present application is fitted on the case by mating the protrusion with the notch, which can effectively reduce the metal scrapings generated by scratching between the end cap and the case from falling into the case, so that the battery cell is made safer.

## Description

The present application cites Chinese Patent Application No. 202120635838.3 filed on March 29, 2021, and entitled "BATTERY CELL, BATTERY AND DEVICE USING BATTERY CELL AS POWER SOURCE", which is incorporated into this application by reference in its entirety.

### Technical Field

The present application relates to the technical field of energy storage, and particularly relates to a battery cell, a battery and a device using a battery cell as a power source.

### Background Art

In some cases, it is generally that an opening of a case is greater than or equal to the size of a end cap, such that the end cap is fitted into the opening of the case. However, due to the unstable production error of the end cap or the case in the production process, a problem of interference fit is prone to occur when fitting the case and the end cap; the interference fit may lead to scratching between the end cap and the case and generate metal scrapings falling into the case, which may cause an internal short circuit of the battery cell and bring about safety problems.

### Summary of the Invention

For this reason, there is a need to provide a battery cell and a power consuming equipment thereof for solving the technical issues that metal scrapings are generated by scratching between the end cap and the case, the metal scrapings fall into the case, and may cause the internal short circuit of the battery cell.

To achieve the above object, the inventors have provided a battery cell comprising:
a case provided with an opening; and
an end cap for covering the opening and being in sealed connection with the case, wherein one of the case or the end cap is provided with a notch, and the other is provided with a protrusion, wherein the protrusion is provided within the notch and matches the shape of the notch, and the end cap is fitted on the case by mating the protrusion with the notch.

In the above technical solution, the end cap is fitted on the case by mating the protrusion with the notch, which can effectively reduce the metal scrapings generated by scratching between the end cap and the case from falling into the case, and make the battery cell safer.

In some examples, the case comprises a plurality of side walls enclosing to form the opening, the notch is provided on at least one of the side walls, and the notch runs through the side wall of the case along the thickness direction of the side wall.

Thus, by providing the notch on at least one of the side walls, the notch running through the side wall of the case along the thickness direction of the side wall, the end cap is fixed on the case by mating the protrusion with the notch, and the scratching between the end cap and the side wall of the case is reduced.

In some examples, the notch has a maximum depth in a vertical direction that is less than the thickness of the end cap.

Thus, by the maximum depth of the notch in the vertical direction being less than the thickness of the end cap, during use by laser welding between the notch and the protrusion, the laser can be blocked by the bottom of the end cap, thereby preventing the laser from penetrating from the bottom of the end cap to the inside of the case and causing the battery cell to be damaged.

In some examples, the battery cell further comprises an insulating member provided at the bottom of the end cap, wherein the maximum depth of the notch in the vertical direction is less than or equal to the maximum thickness of the insulating member in the vertical direction.

Thus, by the maximum depth of the notch in the vertical direction being less than or equal to the maximum thickness of the insulating member in the vertical direction, during use by laser welding between the notch and the protrusion, the laser can be blocked by the bottom of the insulating member, thereby preventing the laser from penetrating from the bottom of the insulating member to the inside of the case and causing the battery cell to be damaged.

In some examples, the bottom of the notch is provided with a step comprising an upper step and a lower step, with the protrusion mating with the lower step.

At this time, when performing laser welding between the notch and the protrusion, the laser is blocked by the upper step, thereby preventing the laser from penetrating from a side surface of the end cap to the inside of the case and causing the battery cell to be damaged.

In some examples, an angle between a side surface of the notch and a bottom surface of the notch is a right angle or an obtuse angle.

In order to facilitate the structural machining of the notch and the protrusion, the angle between the side surface of the notch and the bottom surface of the notch is set as a right angle or an obtuse angle, and the fitting between the notch and the protrusion is facilitated, thereby improving the fitting efficiency.

In some examples, the protrusion has an outer peripheral surface that is flush with an outer peripheral surface of the case; or

in the vertical direction, the projection of the outer peripheral surface of the protrusion is located within the projection range of the outer peripheral surface of the case.

At this time, when two or more battery cells are provided alongside, in order to avoid the risk of the protrusion of one battery cell scratching the adj acent battery cell, the outer peripheral surface of the protrusion is made flush with the outer peripheral surface of the case, or in the vertical direction, the projection of the outer peripheral surface of the protrusion is located within the projection range of the outer peripheral surface of the case, so that the risk of the protrusion scratching the adjacent battery cell can be effectively reduced.

In some examples, the case is a polygonal case, the end cap is a polygonal cover plate, the notch is located at a corner of the case, and the protrusion is correspondingly provided at a corner of the cover plate.

Different from a round case, the interference fit position between the polygonal case and the end cap is generally located at a corner of the polygonal case, and in order to avoid such a situation, the notch is provided at the corner of the polygonal case for reducing the technical issue of the occurrence of interference fit at the corner between the polygonal case and the end cap.

To achieve the above object, the inventors have further provided a battery comprising any one of the above battery cells provided by the inventors.

To achieve the above object, the inventors have still further provided a device using a battery cell as a power source, comprising any one of the above battery cells provided by the inventors.

Different from the prior art, the technical effects of the battery and the power consuming device are: the end cap of the battery cell thereof is fitted on the case by mating the protrusion with the notch, which can reduce scratching between the case and the end cap, and reduce the metal scrapings generated by the scratching from falling into the case, so that the battery cell is made safer.

### Description of Drawings

In order to illustrate the technical solutions of the examples of the present application more clearly, a brief description will be given below of the drawings which need to be used in the examples of the present application. It is obvious that the drawings described below are only some examples of the present application, and for those of ordinary skill in the art, other drawings can be obtained according to the drawings without involving any creative efforts.
Fig. 1 is a schematic structural view of a vehicle according to an example of the present application;
Fig. 2 is a schematic structural view of a battery according to an example of the present application;
Fig. 3 is an exploded view of a battery cell according to an example of the present application;
Fig. 4 is a schematic structural view of a case according to an example of the present application;
Fig. 5 is a partial schematic structural view of an end cap prior to mating with a case according to an example of the present application;
Fig. 6 is a partial schematic structural view of an end cap prior to mating with a case according to another embodiment of the present application;
Fig. 7 is a partial schematic structural view of an end cap prior to mating with a case according to yet another embodiment of the present application;
Fig. 8 is a partial schematic structural view of an end cap prior to mating with a case according to still another embodiment of the present application;
Fig. 9 is a top view of a battery cell according to an example of the present application;
Fig. 10 is a partial sectional view at A-A in Fig. 5.

### Description of reference numerals:

1. Battery cell,
11. Case,
111. Notch,
1111. Upper step,
1112. Lower step,
1113. Side surface,
1114. Bottom surface,
112. Side wall,
113. Opening,
12. End cover,
121. Protrusion,
122. Insulating member,
13. Electrode assembly,
14. Electrode terminal,
2. Battery,
21. Battery module,
22. Upper box body,
23. Lower box body,
3. Vehicle,
31. Motor,
32. Controller.

### Detailed Description

In order to explain the technical contents, the structural features, the objects and effects achieved of the technical solutions in detail, the following detailed description will be made in conjunction with specific examples and drawings.

In the description of the present application, unless otherwise expressly specified and limited, the terms "first" and "second" are only used for descriptive purposes, and cannot be understood as indicating or implying relative importance; unless otherwise specified or stated, the term "plurality" refers to two or more, including two; the terms "connected", "fixed", and the like should be understood broadly, for example, "connected" may be fixedly connected, or may be detachably connected, or integrally connected, or electrically connected; it may be directly connected or indirectly connected through an intermediate medium. For those of ordinary skill in the art, the specific meanings of the above terms in the present invention can be understood according to specific situations.

In the description of the present specification, it is to be understood that the orientation words "upper", "lower", "left", "right" and the like in the description of the examples of the present application are described from the perspective shown in the drawings, and should not be understood as limiting the examples of the present application. In addition, in the context, it should also be understood that when an element is referred to as being "connected" "above" or "below" another element, it can be connected not only directly "above" or "below" the other element, but also indirectly "above" or "below" the other element through an intermediate element.

The technical solutions described in the examples of the present application are applicable to various devices using batteries, for example, mobile phones, portable apparatuses, laptops, battery cars, electric toys, electric tools, electric vehicles, ships, spacecrafts, and the like; among them, the spacecrafts include airplanes, rockets, space shuttles, spaceships, and the like.

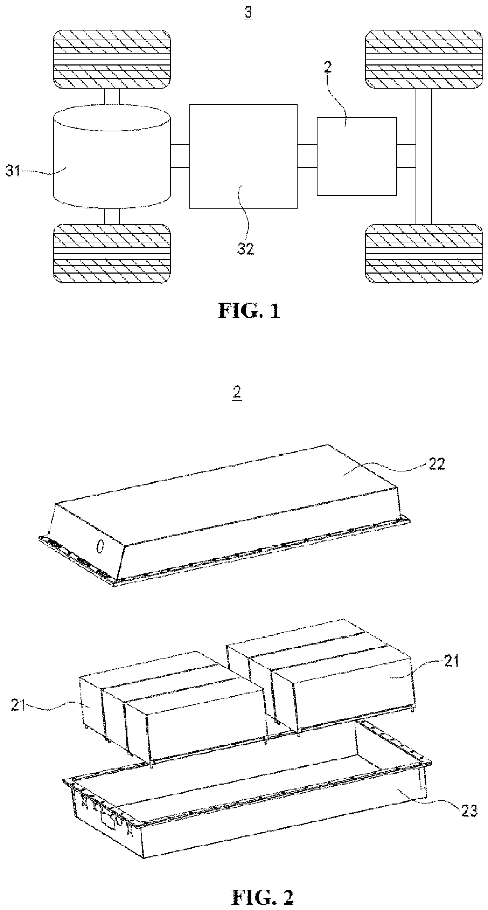

For example, as shown in Fig. 1, which is a schematic structural view of a vehicle 3 according to an example of the present application, the vehicle 3 can be a fuel vehicle, a gas vehicle or anew energy vehicle, and the new energy vehicle can be an all-electric vehicle, a hybrid vehicle, or an extended range vehicle, and the like.

The interior of the vehicle 3 may be provided with a motor 31, a controller 32, and a battery 2, and the controller 32 is used to control the battery 2 to power the motor 31. For example, the battery 2 may be provided at the bottom or front or rear of the vehicle 3. The battery 2 can be used for the power supply of the vehicle, for example, the battery 2 can be used as an operating power source for the vehicle 3, and used in the circuit system of the vehicle 3, such as for the working power demand during the start-up, navigation and operation of the vehicle 3. In another example of the present application, the battery 2 can be used not only as the operating power source of the vehicle 3, but also as the driving power source of the vehicle 3 in place of or partially in place of fuel or natural gas to provide driving power for the vehicle 3.

The battery 2 mentioned in the example of the present application refers to a single physical module comprising one or more battery cells to provide higher voltage and capacity. For example, the battery 2 mentioned in the present application may comprise a battery module or a battery pack or the like. The battery 2 generally comprises a box body for encapsulating one or more battery cells 1. The box body can prevent liquids or other foreign matters from affecting the charging or discharging of the battery cells.

For example, as shown in Fig. 2, a battery 2 according to an example of the present application comprises a battery module 21 and a box body, wherein the battery module 21 can be accommodated within the box body, the number of the battery modules 21 is one or more, and in the present example, a plurality of battery modules 21 are arranged within the box body. The type of the box body is not limited, and the box body may be a frame-shaped box body, a disk-shaped box body, a cassette-shaped box body, or the like, and specifically, the box body can comprise an upper box body 22 and a lower box body 23, wherein the lower box body 23 is used for accommodating the battery module 21, and the upper box body 22 and the lower box body 23 are closed in a covered form.

The battery module 21 comprises two or more battery cells that are provided alongside and electrically connected to each other to form the battery module 21.

In the present application, the battery cell may comprise a lithium-ion secondary battery, a lithium-ion primary battery, a lithium-sulfur battery, a sodium-lithium-ion battery, a sodium-ion battery, a magnesium-ion battery, or the like, without limitation in the examples of the present application. The battery cells may be cylindrical, flat, rectangular, or in other shapes, which is not limited in the examples of the present application. The battery cells are generally divided into three types according to packaging manners: cylindrical battery cells, rectangular battery cells, and pouch cells, which are not limited in the examples of the present application.

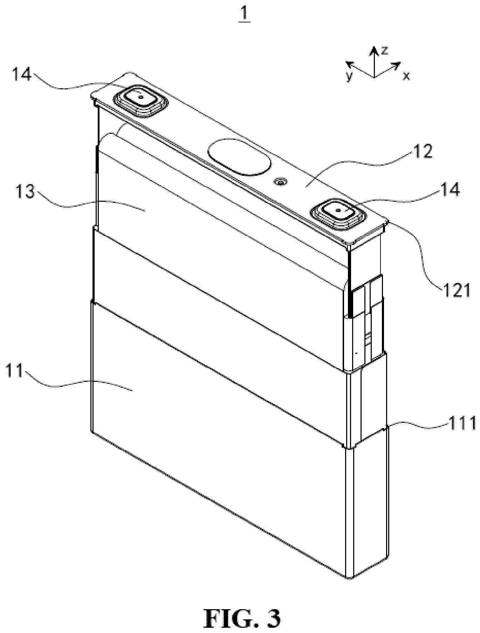

As shown in Fig. 3, the battery cell 1 comprises an electrode assembly 13 and an electrolyte solution, and the electrode assembly 13 is composed of a positive electrode sheet (not shown), a negative electrode sheet (not shown), and a separator (not shown). The battery cell 1 mainly operates by moving metal ions between the positive electrode sheet and the negative electrode sheet. The positive electrode sheet comprises a positive electrode current collector and a positive electrode active material layer, wherein the positive electrode active material layer is coated on a surface of the positive electrode current collector, the part of the positive electrode current collector not coated with the positive electrode active material layer protrudes from the part of the positive electrode current collector already coated with the positive electrode active material layer, and the part of the positive electrode current collector not coated with the positive electrode active material layer serves as a positive electrode tab. Taking a lithium-ion battery as an example, the material of the positive electrode current collector may be aluminum, and the positive electrode active material may be lithium cobaltate, lithium iron phosphate, ternary lithium, lithium manganate, or the like. The negative electrode sheet comprises a negative electrode current collector and a negative electrode active material layer, wherein the negative electrode active material layer is coated on a surface of the negative electrode current collector, the part of the negative electrode current collector not coated with the negative electrode active material layer protrudes from the part of the negative electrode current collector already coated with the negative electrode active material layer, and the part of the negative electrode current collector not coated with the negative electrode active material layer serves as a negative electrode tab. The material of the negative electrode current collector may be copper, and the negative electrode active material may be carbon, silicon, or the like. In order to ensure that a large current is passed without fusing, there are a plurality of positive electrode tabs stacked together, and there are a plurality of negative electrode tabs stacked together. A diaphragm may be made from polypropylene (PP), polyethylene (PE), or the like. In addition, the electrode assembly 13 may have a wound structure or a laminated structure, without limitation in the examples of the present application.

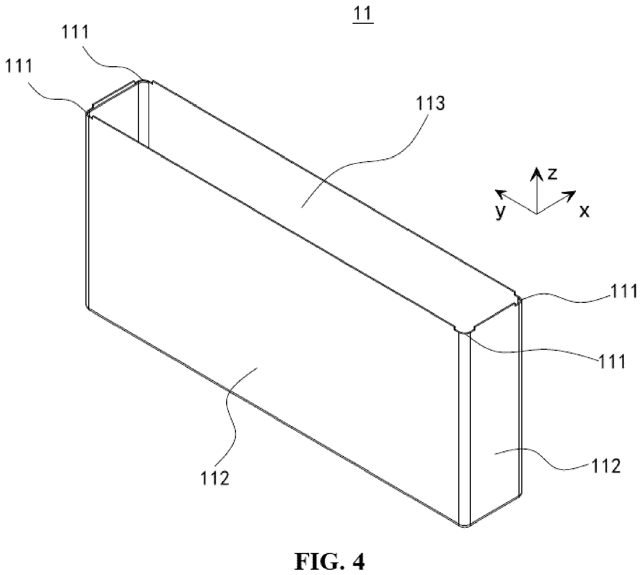

As shown in Fig. 3 and Fig. 4, the battery cell 1 may further comprise two electrode terminals 14, which can be provided on the end cap 12. The end cap 12 is generally in the shape of a flat plate, and the two electrode terminals 14 are a positive electrode terminal 14 and a negative electrode terminal 14, respectively. Each of the electrode terminals 14 is provided with a connecting member, which may alternatively be referred to as a current collecting member, for electrically connecting the electrode assembly 13 and the electrode terminals 14.

The battery cell 1 further comprises a case 11, which can be made of a metal material such as aluminum, aluminum alloy, nickel-plated steel, or the like, and the case 11 may have a hexahedral shape or other shapes, and has an opening 113. The case 11 is provided with an accommodating cavity, and the electrode assembly 13 is accommodated within the accommodating cavity of the case 11. The opening 113 of the case 11 is covered with the end cap 12, which can be made of a metal material such as aluminum, aluminum alloy, or the like, and the size of the end cap 12 is adapted to the size of the opening 113 of the battery case 11.

In the production process of the existing end cap 12 or case 11, due to the unstable production error, a problem of interference fit is prone to occur when fitting the case 11 and the end cap 12; the interference fit may lead to scratching between the end cap 12 and the case 11 and generate metal scrapings falling into the case 11, which may cause an internal short circuit of the battery cell 1 and bring about safety problems.

Therefore, the examples of the present application provide a technical solution in which one of the case 11 or the end cap 12 is provided with a notch, and the other is provided with a protrusion, wherein the protrusion is provided within the notch and matches the shape of the notch; the end cap 12 is fitted on the case 11 by mating the protrusion with the notch, and mutually fixed through the notch and the protrusion, so that the problem of generating metal scrapings by scratching when fitting the end cap 12 and the case 11 can be reduced, and the battery cell 1 is made safer.

In some examples, a protrusion 121 may be provided on the case 11, while a notch 111 is provided on the end cap 12, the protrusion 121 is provided within the notch 111, and the shape of the protrusion 121 matches the shape of the notch 111.

In some examples, the protrusion 121 is provided on the end cap 12, the notch 111 is provided on the case 11, the protrusion 121 is provided within the notch 111, the shape of the protrusion 121 matches the shape of the notch 111, and the end cap 12 is fitted on the case 11 by mating the protrusion 121 with the notch 111.

The examples of the present application are mainly described with reference to the case where the protrusion 121 is provided on the end cap 12 and the notch 111 is provided on the case 11.

In some examples of the present application, the end cap 12 is fixed to the case 11 by welding, such as laser welding.

As shown in Fig. 4, the case 11 comprises a plurality of side walls 112 enclosing to form the opening 113; the case 11 further comprises a bottom wall, wherein the bottom wall and the plurality of side walls 112 enclose to form the case 11; the notch 111 is provided on the side wall 112, and runs through the side wall 112 of the case 11 along the thickness direction of the side wall 112 (the direction as indicated by the arrow x or the direction as indicated by the arrow y in the figure). Thus, by providing the notch 111 on the side wall 112, the notch 111 runs through the side wall 112 of the case 11 along the thickness direction of the side wall 112 (the direction as indicated by the arrow x or the direction as indicated by the arrow y in the figure), the end cap 12 is fixed to the case 11 by mating the protrusion 121 with the notch 111, and the problem of scratching between the end cap 12 and the case 11 is reduced.

In some examples, the case 11 is a polygonal case 11, the end cap 12 is a polygonal cover plate, the notch 111 is located at a corner of the case 11, and the protrusion 121 is correspondingly provided at a corner of the cover plate. Different from a round case 11, the interference fit position between the polygonal case 11 and the end cap 12 is generally located at a corner of the polygonal case 11, and in order to avoid such a situation, the notch 111 is provided at the corner of the polygonal case 11 for reducing the problem of interference fit at the corner between the polygonal case 11 and the end cap 12.

In the present example, the case 11 is a rectangular case 11, the end cap 12 is a rectangular cover plate, the notch 111 is located at a corner of the rectangular case 11, and the protrusion 121 is correspondingly provided at a corner of the rectangular cover plate. In the present example, each of four corners of the rectangular case 11 is provided with a notch 111, and each of four corners of the rectangular cover plate is provided with a protrusion 121. Since the mating positions of the case 11 and the end cap 12 are at the four corners of the case 11, to reduce the interference fit between the case 11 and the end cap 12, the notches 111 are also provided at the four corners of the case 11. Thus, only the long side and the wide side of the end cap 12 are left mating with the inner long side and the inner wide side of the case 11, which can effectively reduce the technical issue of interference fit at the corner between the case 11 and the end cap 12.

It will be appreciated that at least one of the four corners of the rectangular case 11 is provided with a notch 111, and at least one of the four corners of the corresponding rectangular cover plate is provided with a protrusion 121. The interference fit position between the rectangular case 11 and the end cap 12 is generally located at a corner of the rectangular case 11, and in order to avoid such a situation, the notch 111 is provided at the corner of the rectangular case 11 for reducing the technical issue of interference fit at the corner between the rectangular case 11 and the end cap 12.

In the present example, the four corners of the case 11 are inverted rounded corners, and the four corners of the end cap 12 match the four corners of the case 11. At this time, the four corners of the case 11 are inverted rounded corners, the four corners of the end cap 12 are also inverted rounded corners, the protrusions 121 are provided at the four corners of the end cap 12, and the inverted rounded corners of the protrusions 121 should be less than or equal to the inverted rounded corners of the case 11. When two or more battery cells 1 are provided alongside, in order to reduce the risk of the end cap 12 of one battery cell 1 scratching the adjacent battery cell 1, in the present example, the inverted rounded corners of the protrusions 121 are kept in consistence with the inverted rounded corners of the case 11, and the inverted rounded corners range from 2 millimeters (mm) - 5 millimeters (mm).

In other examples, it is also within the scope of the present example that the case 11 is cylindrical and provided with the notch 111, and the end cap 12 is around end cap 12 and provided with the protrusion 121.

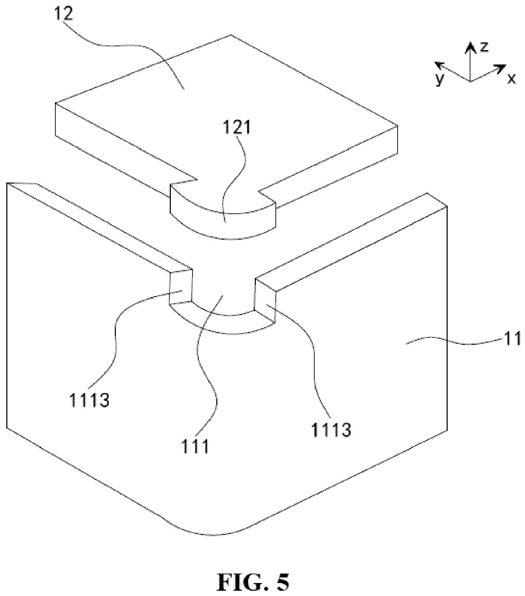

As shown in Fig. 5 to Fig. 7, in some examples, the protrusion 121 is provided on the end cap 12, the notch 111 is provided on the case 11, the protrusion 121 is provided within the notch 111, the shape of the protrusion 121 matches the shape of the notch 111, and the end cap 12 is fitted on the case 11 by mating the protrusion 121 with the notch 111.

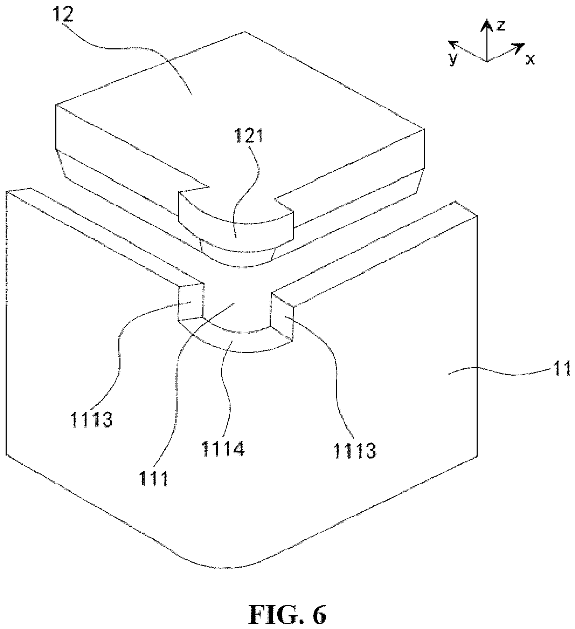

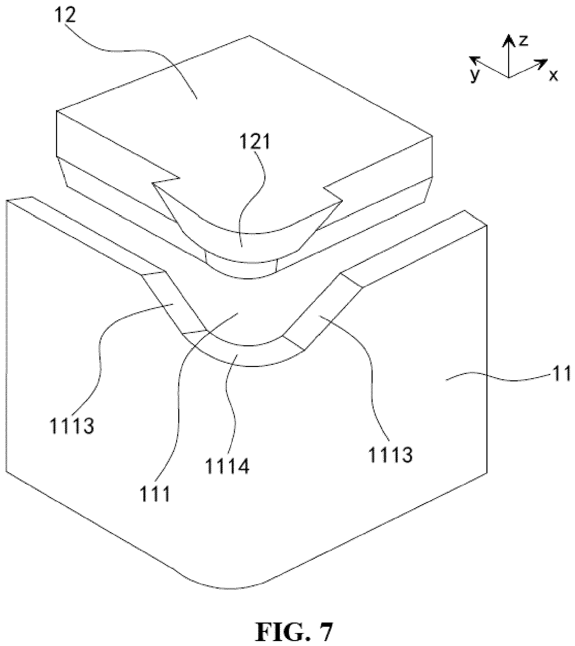

In some examples, as shown in Fig. 6 and Fig. 7, the notch 111 comprises two side surfaces 1113 and one bottom surface 1114, the angle between the side surface 1113 of the notch 111 and the bottom surface 1114 of the notch 111 is a right angle or an obtuse angle, and the shape and structure of the corresponding protrusion 121 are changed according to the shape and structure of the notch 111. In order to facilitate the structural machining of the notch 111 and the protrusion 121, the angle between the side surface 1113 of the notch 111 and the bottom surface 1114 of the notch 111 is set as a right angle or an obtuse angle, and the fitting between the notch 111 and the protrusion 121 is facilitated, thus improving the fitting efficiency. When the side surface 1113 of the notch 111 is at an obtuse angle with the bottom surface 1114 of the notch 111, the angle is 110°-150°; and compared with other angles, the angle between the side surface 1113 of the notch 111 and the bottom surface 1114 of the notch 111 is set as a right angle or an obtuse angle, which facilitates machining and fitting.

In some examples, as shown in Fig. 6 and Fig. 7, the notch 111 is provided on the case 11, and the maximum depth of the notch 111 in the vertical direction (the direction as indicated by the arrow z in the figures) is less than the thickness of the end cap 12. Thus, during use by laser welding between the notch 111 and the protrusion 121, the laser can be blocked by the bottom of the end cap 12, thereby preventing the laser from penetrating into the inside of the case 11 from the bottom of the end cap 12 and causing the battery cell 1 to be damaged.

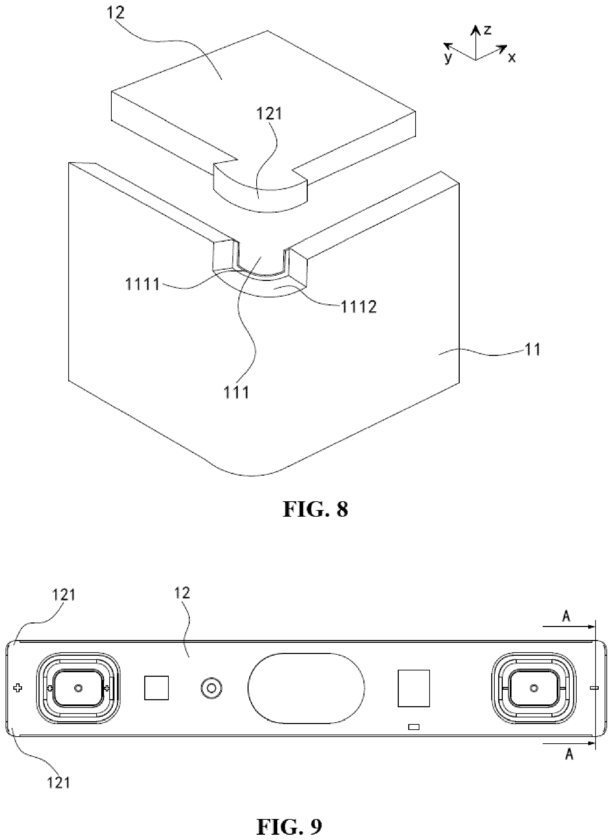

In some examples, as shown in Fig. 8, the notch 111 is provided on the case 11, the case 11 is provided at the bottom of the notch 111 with a step comprising an upper step 1111 and a lower step 1112, with the protrusion 121 mating with the lower step 1112. At this time, the protrusion 121 of the end cap 12 is installed within the notch 111 of the case 11, and when the bottom of the protrusion 121 and the lower step 1112 are welded by laser, even if the laser inadvertently penetrates through the gap between the protrusion 121 and the notch 111, it can be blocked by the step, and is prevented from penetrating into the inside of the case 11 from the side surface of the end cap 12 and causing the battery cell 1 to be damaged.

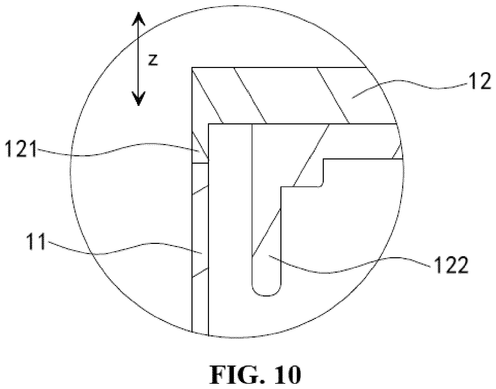

As shown in Fig. 9 and Fig. 10, in the present example, the outer peripheral surface of the protrusion 121 is flush with the outer peripheral surface of the case 11, wherein the outer peripheral surface of the case 11 refers to the surface of the side wall 112 away from the accommodating cavity, and the outer peripheral surface of the protrusion 121 refers to the surface of the end cap 12 corresponding to the outer peripheral surface of the case 11. At this time, when two or more battery cells 1 are provided alongside, in order to avoid the risk of the protrusion 121 of one battery cell 1 scratching the adjacent battery cell 1, the outer peripheral surface of the protrusion 121 is made flush with the outer peripheral surface of the case 11; alternatively in other examples, in the vertical direction (the direction as indicated by the arrow z in the figure), the projection of the outer peripheral surface of the protrusion 121 is located within the projection range on the outer peripheral surface of the case 11, so that the risk of the protrusion 121 of the battery cell 1 scratching the adjacent battery cell 1 can also be effectively reduced, which is also within the scope of the present example.

With continued reference to Fig. 10, in some of the present examples, the battery cell 1 further comprises an insulating member 122, wherein the insulating member 122 is provided at the bottom of the end cap 12, the notch 111 is provided on the case 11, the maximum depth of the notch 111 in the vertical direction (the direction as indicated by the arrow z in the figure) is less than or equal to the maximum thickness of the insulating member 122 in the vertical direction (the direction as indicated by the arrow z in the figure), and what is meant here is that the bottom of the notch 111 is above the bottom of the insulating member 122. Thus, when the notch 111 is provided on the case 11, by the maximum depth of the notch 111 in the vertical direction (the direction as indicated by the arrow z in the figure) being less than or equal to the maximum thickness of the insulating member 122 in the vertical direction (the direction as indicated by the arrow z in the figure), as laser welding is performed between the notch 111 of the case 11 and the end cap 12, the laser can be blocked by the insulating member 122, and is prevented from penetrating into the inside of the case 11 from the side surface of the end cap 12 and causing the battery cell 1 to be damaged.

It is worth mentioning that no matter how the shapes, sizes, and angles of the notch 111 and the protrusion 121 are adjusted and modified, as long as the notch 111 and the protrusion 121 can be fixed to each other, it is within the scope of the present example.

In use, the electrode assembly 13 is placed within the case 11, the protrusion 121 of the end cap 12 corresponds to the notch 111 of the case 11, the end cap 12 is covered on the opening 113 of the case 11, and the protrusion 121 of the end cap 12 and the notch 111 of the case 11 are welded and fixed by laser welding to complete the fitting.

The end cap 12 of the present application is fitted on the case 11 by mating the protrusion 121 with the notch 111, which reduces the occurrence of scratching between the end cap 12 and the inner wall of the case 11, and reduces the metal scrapings generated by scratching from falling into the case 11.

It should be noted that while the above examples have been described herein, the scope of patent protection of the present application is not thus limited. Therefore, based on the innovative ideas of the present application, changes and modifications of the examples described herein, or equivalent structure or equivalent process transformations made utilizing the specification and drawings of the present application, and the direct or indirect application of the above technical solutions in other related technical fields are all included in the scope of patent protection of the present application.

## Claims

1. A battery cell, comprising:
a case provided with an opening; and
an end cap for covering the opening and being in sealed connection with the case, wherein one of the case or the end cap is provided with a notch, and the other is provided with a protrusion, wherein the protrusion is provided within the notch and matches the shape of the notch, and the end cap is fitted on the case by mating the protrusion with the notch.

2. The battery cell according to claim 1, wherein the case comprises a plurality of side walls enclosing to form the opening, the notch is provided on at least one of the side walls, and the notch runs through the side wall of the case along the thickness direction of the side wall.

3. The battery cell according to claim 2, wherein the notch has a maximum depth in a vertical direction that is less than the thickness of the end cap.

4. The battery cell according to any one of claims 2-3, further comprising an insulating member provided at the bottom of the end cap, wherein the maximum depth of the notch in the vertical direction is less than or equal to the maximum thickness of the insulating member in the vertical direction.

5. The battery cell according to any one of claims 2-4, wherein the bottom of the notch is provided with a step comprising an upper step and a lower step, with the protrusion mating with the lower step.

6. The battery cell according to any one of claims 2-5, wherein an angle between a side surface of the notch and a bottom surface of the notch is a right angle or an obtuse angle.

7. The battery cell according to any one of claims 2-6, wherein the protrusion has an outer peripheral surface that is flush with an outer peripheral surface of the case; or
in the vertical direction, the projection of the outer peripheral surface of the protrusion is located within the projection range of the outer peripheral surface of the case.

8. The battery cell according to any one of claims 1-7, wherein the case is a polygonal case, the end cap is a polygonal cover plate, the notch is located at a corner of the case, and the protrusion is correspondingly provided at a corner of the cover plate.

9. A battery comprising the battery cell of any one of claims 1-8.

10. A device using a battery cell as a power source, comprising the battery cell of any one of claims 1-8.
